Europäisches Patentamt

European Patent Office

Office européen des brevets

(11) Publication number : **0 506 414 A1**

# (12) EUROPEAN PATENT APPLICATION

(21) Application number : **92302652.0**

(22) Date of filing : **26.03.92**

(51) Int. Cl.⁵ : **F16B 7/14**

(30) Priority : **27.03.91 GB 9106532**

(43) Date of publication of application :
**30.09.92 Bulletin 92/40**

(84) Designated Contracting States :
**AT BE CH DE GB LI LU NL**

(71) Applicant : **ITW LIMITED**
**ST. Marks House St. Marks Road**
**Windsor Berkshire SL4 3BD (GB)**

(72) Inventor : **Day, Robert Henry**
**Cranfield, Forest Road**
**Binfield, Bracknell, Berkshire (GB)**

(74) Representative : **Gordon, Michael Vincent**
**GILL JENNINGS & EVERY 53-64 Chancery**
**Lane**
**London WC2A 1HN (GB)**

(54) Screw/cap assemblies.

(57)     A screw/cap assembly (10) comprising a screw (12) having a head (14) at one end, and an initially separate cap (16), is characterised by the provision of an initially separate underhead washer (18) which is capable of being secured to the cap (16) to encapsulate the head (14).

# Fig.1.

EP 0 506 414 A1

The present invention relates generally to screw/cap assemblies and is concerned more especially but not exclusively with improvements to the screw/cap assemblies disclosed in our EP-B-0358471 to which a reader is invited to refer for background information.

According to that invention, a screw/cap assembly comprises a screw having a head at one end which is capped, before use, by an initially separate cap stuck onto the head by an adhesive, thereby enabling a manufacturer to keep separate stocks of the caps and stocks of the screws and only stick chosen caps onto the heads of chosen screws in response to specific orders from customers.

The cap may be formed of a plastics material, in a desired colour, with a conventional external torque receiving configuration formed by, for example, a hexagon or a double hexagon.

The screw may be formed of a metallic material, in a conventional manner, and may include a drill tip as well as an external helical thread.

Preferably, the head of the screw includes an external drive portion extending from a radially enlarged washer portion, and the cap includes an internal drive portion extending from a radially enlarged recess portion. The drive portions may be of hexagonal outline. The washer portion of the head may be fully received in the recess portion of the cap when the two drive portions are fitted together, and the recess portion of the cap may be formed with inwardly directed protrusions for snap engagement with the washer portion of the head.

A potential disadvantage of the above screw/cap assembly is that the underside of the washer portion of the head may be subject to corrosion problems, caused by water ingress, even if the underside of the washer portion of the head is provided with a rubber sealing washer.

According to the present invention, a screw/cap assembly comprising a screw having a head at one end, and an initially separate cap is characterised by the provision of an initially separate underhead washer which is capable of being secured to the cap to encapsulate the head.

The engagement between the underhead washer and the cap is preferably a snap engagement, for example resulting from an edge of the underhead washer resiliently snapping into a circumferential groove formed in the cap or past a rib formed around at least part of the circumference of the cap, but may alternatively or additionally comprise an adhesive engagement especially if the cap itself is also to be adhesively stuck onto the head.

Preferably, the underhead washer is moulded of a plastics material different from that for the cap, such as the underhead washer being formed of nylon and the cap being formed of glass filled polyester.

Also preferably, the underhead washer is of symmetrical cross-section to facilitate vibrator bowl feeding, has a double-chamfered edge to facilitate snap engagement thereof with the cap, and is of multi-faceted peripheral outline to facilitate escape of air and excess adhesive during said snap engagement thereof.

Preferably, the underhead washer is inwardly dished on that face intended to abut the head, whereby for reasons explained hereinafter a better distribution is obtained of adhesive for securing the head, cap and underhead washer to one another.

It is possible for the screw/cap assembly of the present invention to be further provided with a sealing washer, such as a conventional rubber or rubber-like sealing washer, and such a sealing washer may be restrained from bulging sideways under load if that face of the underhead washer intended to abut the sealing washer is inwardly dished.

Several screw/cap assemblies, in accordance with the present invention, will now be described, by way of example only, with reference to the accompanying drawings, in which:-

Figure 1 is a partially axially sectioned front view of a screw/cap assembly when fully assembled;

Figures 2, 3 and 4 are, respectively, underplan views of a cap and an underhead washer, and a side view of the underhead washer;

Figures 5, 6 and 7 are, respectively, underplan views of a modified cap and a modified underhead washer, and a side view of the modified underhead washer;

Figures 8, 9 and 10 are, respectively, underplan views of a further cap and a further underhead washer, and a side view of the further underhead washer; and

Figures 11, 12, 13 and 14 are, respectively, partially axially sectioned front views of the screw/cap assembly during different stages in its assembly also illustrating a sealing washer.

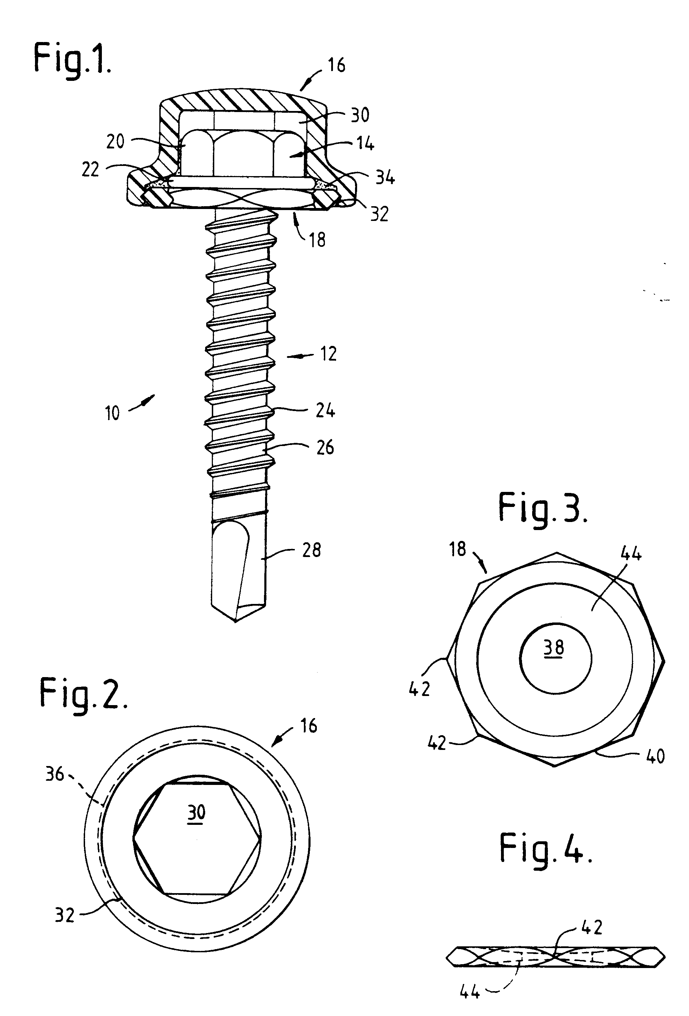

Referring initially to Figure 1, a screw/cap assembly 10 in accordance with the present invention comprises a screw 12 having a head 14 at one end, an initially separate cap 16 and an initially separate underhead washer 18 which is capable of being secured to the cap 16 to encapsulate the head 14.

The screw 12 may be formed of steel and may carry a protective coating of paint. The head 14 may include a hexagonal drive portion 20 extending from a radially enlarged washer portion 22. A threaded portion 24 may extend axially from the head 14 along a shank 26 towards a drill portion 28. The cap 16 may be moulded of a plastics material, such as 20% glass filled polyester, and may be coloured during its manufacture by conventional colouring agents. The cap 16 may include an internal hexagonal drive portion 30 extending from a radially enlarged recess portion 32. Externally, the cap 16 may have conventional torque receiving surfaces arranged as a hexagon.

The underhead washer 18, which may also be moulded of a plastics material, such as nylon, and may also be coloured, is in snap engagement with the recess portion 32 of the cap 16.

In accordance with the invention disclosed in our above-noted EP-B-0358471, there may also be adhesive 34 securing the head 14, the cap 16 and the underhead washer 18 to one another.

As shown in Figure 2, the recess portion 32 of the cap 16 may be formed with a plain internal groove 36. As shown in Figures 3 and 4, the underhead washer 18 may have a central circular aperture 38 and a peripheral, double-chamfered and multi-faceted edge 40 presenting a plurality of knibs 42. It will be clear that the underhead washer 18 can be pushed into the cap 16 in such a manner that the knibs 42 snap into engagement with the groove 36.

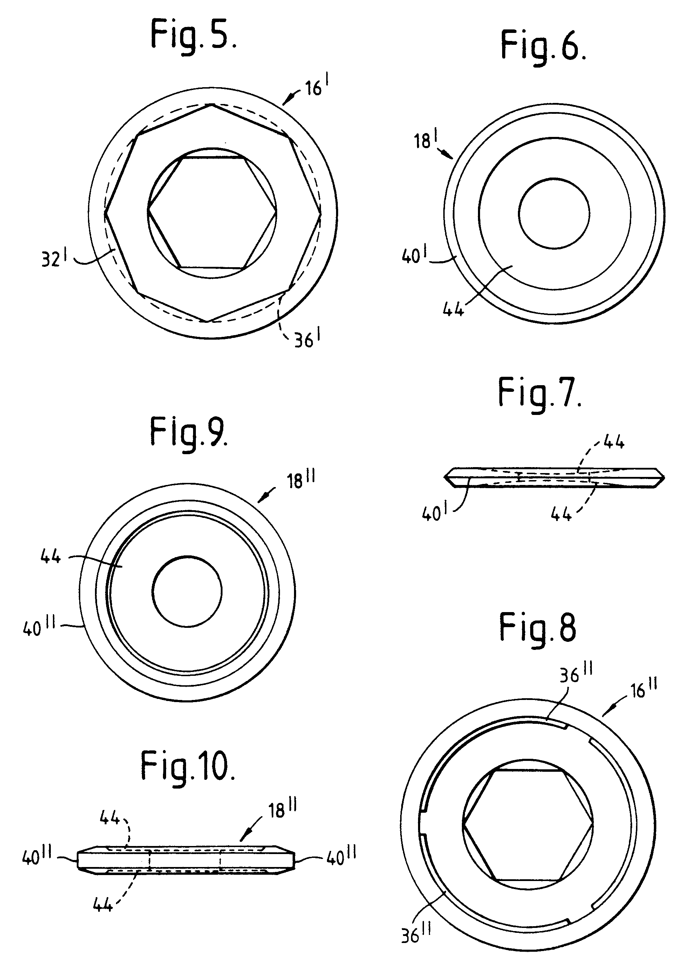

Alternatively, as shown in Figure 5, the cap 16′ may be formed with a multi-faceted recess portion 32′ so that a groove 36′ is formed as a series of groove segments. Also alternatively, as shown in Figures 6 and 7, the underhead washer 18′ may be formed with a simple double-chamfered peripheral edge 40′ capable of being pushed into snap engagement with the groove 36′ in the cap 16′.

In a further modification, as shown in Figure 8, the cap 16″ may be formed with a plurality of arcuate protrusions forming an interrupted annular rib 36″. A modified underhead washer 18″ for use therewith, as shown in Figures 9 and 10, may still be double-chamfered but to present a plain peripheral face 40″, rather than a sharp edge, which is to be snapped past the rib 36″ formed on the cap 16″.

All of the underhead washers 18, 18′ and 18″ are preferably inwardly dished on both of their major faces as indicated at 44.

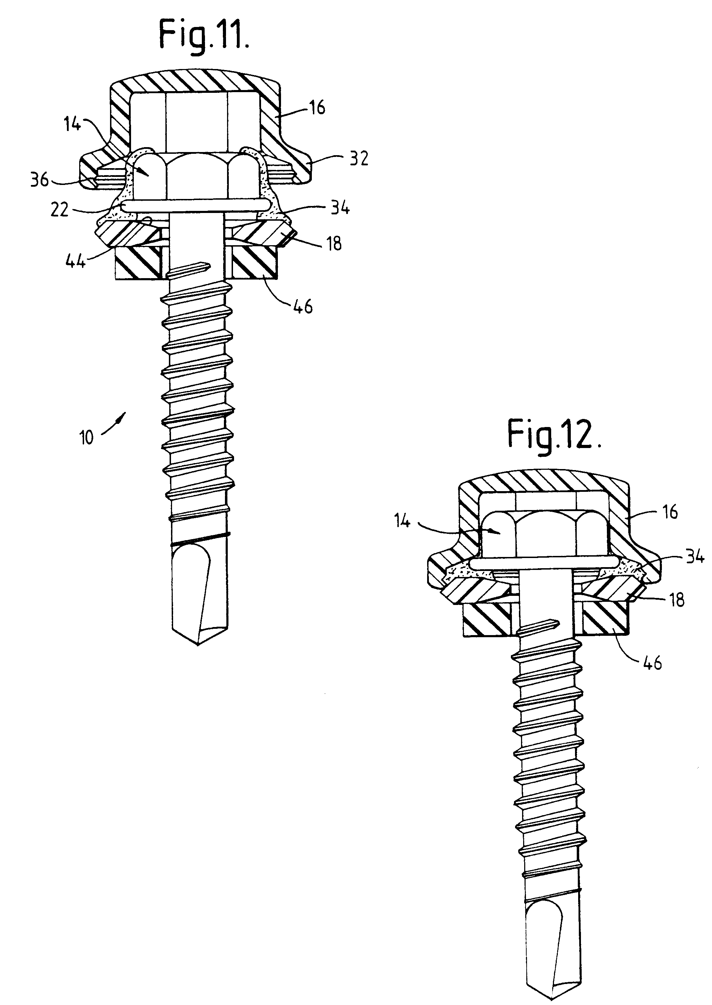

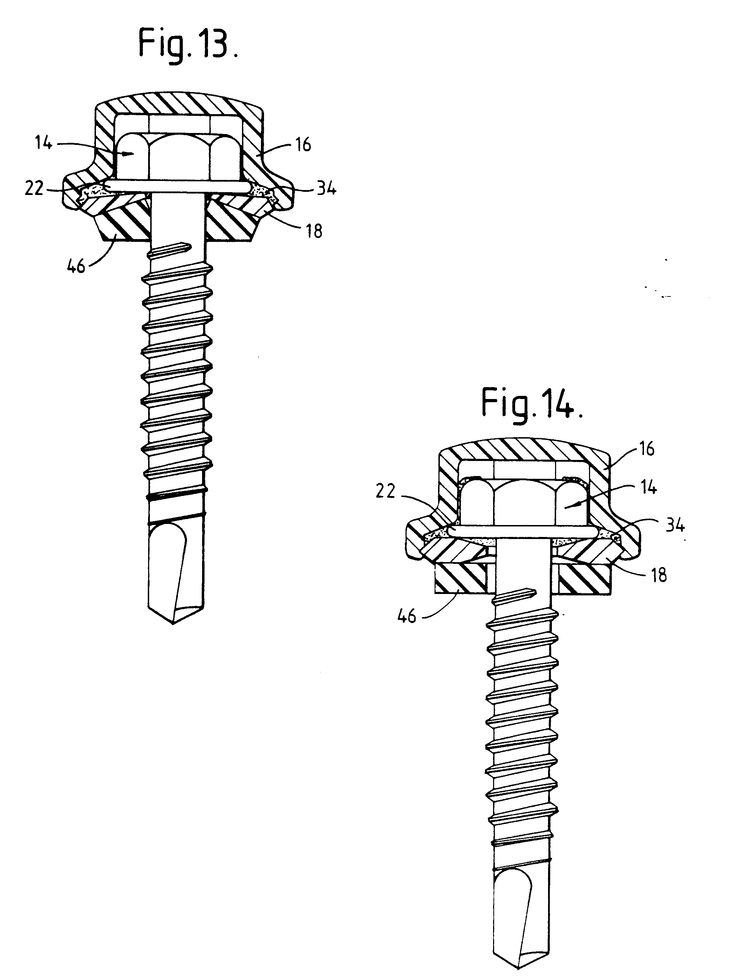

Referring finally to Figures 11 to 14, the screw/cap assembly 10 is shown with a conventional rubber sealing washer 46 during several stages of assembly. The adhesive 34 is applied in the positions as shown (Figure 11). When a clamping force is applied (Figure 12), pushing the cap 16 down into abutment with the head 14 and the underhead washer 18 up into abutment with the head 14, the underhead washer 18 is upwardly deformed (Figure 13) to bring its upper inwardly dished face 44 into contact with the lower face of the washer portion 22 of the head 14. This causes air between the head 14 and the underhead washer 18 to be expelled and also causes adhesive 34 between the head 14 and the underhead washer 18 to be mostly expelled but with a small amount of the adhesive 34 being squeezed between the abutting faces of the head 14 and the underhead washer 18 to produce an advantageous wetting effect. When the clamping force is removed (Figure 14), some of the expelled adhesive 34 is sucked back around the peripheral edge 40 to improve the circumferential adhesive line and give improved adhesion.

## Claims

1. A screw/cap assembly (10) comprising a screw (12) having a head (14) at one end, and an initially separate cap (16; 16′; 16″), is characterised by the provision of an initially separate underhead washer (18; 18′; 18″) which is capable of being secured to the cap (16; 16′;16″) to encapsulate the head (14).

2. A screw/cap assembly according to claim 1, characterised in that the underhead washer and the cap are secured by a snap engagement resulting from an edge (40; 40′; 40″) of the underhead washer resiliently snapping into a circumferential groove (36; 36′) formed in the cap or past a rib (36″) formed around at least part of the circumference of the cap.

3. A screw/cap assembly according to either preceding claim, characterised in that the underhead washer and the cap are moulded of different plastics materials.

4. A screw/cap assembly according to any preceding claim, characterised in that the underhead washer is inwardly dished (44) on that face intended to abut the head (14) during assembly.

5. A screw/cap assembly according to any preceding claim, characterised in that the underhead washer is inwardly dished (44) on that face intended to abut a sealing washer (46) during assembly so that the underhead washer is sandwiched between the head (14) and the sealing washer (46).

6. A screw/cap assembly according to any preceding claim, characterised in that the underhead washer has a double-chamfered edge (40; 40′; 40″).

7. A screw/cap assembly according to any preceding claim, characterised in that the head (14) of the screw (12) includes an external drive portion (20) extending from a radially enlarged washer portion (22), and the cap (16; 16′; 16″) included an internal drive portion (30) extending from a radially enlarged recess portion (32).

8. A screw/cap assembly according to any preceding claim, characterised in that the underhead washer and the cap are secured by an adhesive engagement.

# Fig.1.

# Fig.2.

# Fig.3.

# Fig.4.

# Fig.5.

# Fig.6.

# Fig.9.

# Fig.7.

# Fig.10.

# Fig.8

# Fig.11.

14

36

22

44

10

16

32

34

18

46

# Fig.12.

14

16

34

18

46

Fig. 13.

Fig. 14.

## EUROPEAN SEARCH REPORT

| | European Patent Office | | Application Number |
|---|---|---|---|
| | | | EP 92 30 2652 |

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-2 121 270 (BARBER AND COLMAN LIMITED) | 1-4,6 | F16B7/14 |
| A | * the whole document * | 7 | |
| | --- | | |
| X | BE-A-682 900 (H.H.ROBERTSON COMPANY) | 1-3,5,6 | |
| | * the whole document * | | |
| | --- | | |
| X | DE-A-2 242 870 (GERTRUD KNAPP PLASTIK-SPRITZGUSS ) | 1,2 | |
| | * the whole document * | | |
| | --- | | |
| X | EP-A-0 265 132 (STEELPRESS (SUPPLIES) LIMITED) | 1,7 | |
| | * abstract; figures 5,14 * | | |
| | --- | | |
| A | EP-A-0 358 471 (ITW LIMITED) | 8 | |
| | * the whole document * | | |
| | ----- | | TECHNICAL FIELDS SEARCHED (Int. Cl.5) |
| | | | F16B |

The present search report has been drawn up for all claims

| Place of search | Date of completion of the search | Examiner |
|---|---|---|
| THE HAGUE | 17 JULY 1992 | ARESO Y SALINAS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)